# EUROPÄISCHE PATENTSCHRIFT

(11) **EP 1 896 274 B1**
(45) Veröffentlichungstag und Bekanntmachung des Hinweises auf die Patenterteilung: **10.12.2008**
(21) Anmeldenummer: 06777529.6
(22) Anmeldetag: 30.06.2006
(51) Int. Cl.: B60B 17/00, F16D 1/00

(54) **GUMMIGEFEDERTES SCHIENENFAHRZEUGRAD**
RAILWAY VEHICLE WHEEL WITH ELASTIC RUBBER SUSPENSION
ROUE DE VEHICULE SUR RAILS A SUSPENSION ELASTIQUE EN CAOUTCHOUC

(30) Priorität: 30.06.2005 DE 102005030966
(43) Veröffentlichungstag der Anmeldung: 12.03.2008
(73) Patentinhaber: Bochumer Verein Verkehrstechnik GmbH, 44793 Bochum (DE)
(72) Erfinder: MURAWA, Franz, 44805 Bochum (DE); SCHUMACHER, Björn, 42349 Wuppertal (DE)
(74) Vertreter: Cohausz & Florack
(86) Internationale Anmeldenummer: PCT/EP2006/063731
(87) Internationale Veröffentlichungsnummer: WO 2007/003591

(56) Entgegenhaltungen:
- EP-A2- 0 845 614
- DE-A1- 2 406 206
- DE-A1- 4 300 553

## Beschreibung

Die Erfindung betrifft ein gummigefedertes Schienenrad, bei dem ein Radreifen mit einer Radfelge über eine Gummieinlage verbunden ist, die von zwei flachen, geneigt bis senkrecht zur Radachse angeordneten, perforationsfreien Ringen gebildet ist, wobei die Ringe ausschließlich zwischen geneigt bis senkrecht zur Radachse angeordneten, von einem umlaufenden, innenseitigen, mittigen Steg des Radreifens und zwei äußeren Flanschen der Radfelge gebildeten Stützflächen unter axialer Vorspannung gehalten sind und bei radialer Belastung des Fahrzeugrades überwiegend auf Schub beansprucht werden, und wobei zumindest einer der Flansche von außerhalb der Ringe der Gummieinlage angeordneten Schraubenbolzen unmittelbar an der Felge gehalten ist.

Ein solches Schienenrad ist aus der Literatur und Praxis bekannt. Gummigefederte Schienenräder sind seit weit über einem halben Jahrhundert bekannt und haben sich in der Praxis bewährt. Bei einem hunderttausendfach eingesetzten gummigefederten Schienenrad besteht die Gummieinlage aus einer Vielzahl von radial hochvorgespannten Gummiklötzen, die in einander zugekehrten Ringnuten des Radreifens und der Radfelge sitzen. Gegenüber einem solchen Schienenfahrzeugrad hat das Schienenfahrzeugrad der eingangs genannten Art mit der anders orientierten und axial vorgespannten Gummieinlage den Vorteil einer höheren axialen Steifigkeit bei seitlichen Belastungen, wie bei Kurvenfahrten und einer geringeren Federkonstante bei vertikalen Belastungen. Nachteilig ist allerdings, dass die Gummieinlage unter Vertikalbelastung im wesentlichen auf Schub belastet wird.

Um diesen hohen Belastungen auf Schub gewachsen zu sein, hat man versucht, möglichst viel Gummivolumen einzusetzen und die Gummieinlage unter hoher axialer Vorspannung zu setzen. Um die hohe axiale Vorspannung aufzubringen, werden die die Gummieinlage außen einfassenden Flansche miteinander mit durch die Flansche und die Gummieinlage und den Steg durchdringenden Schraubenbolzen verspannt. Zwar lässt sich damit eine gleichmäßige axiale Vorspannung in der Gummieinlage über den Durchmesser erzielen, doch geht für diese Art der Verspannung Gummivolumen verloren. Eine größere radiale Fläche zur Unterbringung von mehr Gummivolumen verbietet sich aber bei verschiedenen Anwendungen, insbesondere Niederflurwagen, für die vergleichsweise kleine Raddurchmesser verlangt werden.

Aus der DE 44 30 342 A1 ist ein gummigefedertes Schienerad bekannt, welches eine Radfelge, einen Radreifen sowie ringförmige Gummieinlagen umfasst. Diese werden beidseits der Radmittelebene in von einem von dem Radreifen radial nach innen ragendenden Steg und von der Radfelge entsprechend radial nach außen ragenden Flanschen gebildeten Ringräumen unter im wesentlichen axialer Vorspannung ausschließlich zwischen Stützflächen des Steges und der Flansche gehalten. Während der eine Flansch einstückig mit dem Felgenkörper ausgebildet ist, ist der andere Flansch mit einem angeformten ringförmigen Ansatzstück mit rechteckigem Querschnitt in einer entsprechenden in dem Felgenkörper vorgesehenen ringförmigen Ausnehmung platziert und über eine Schraubverbindung unmittelbar mit dem Felgenkörper verbunden, wobei das ringförmige Ansatzstück und die ringförmige Ausnehmung einen zylindrischen Sitz bilden. Die axiale Vorspannung der Gummieinlagen wird hierbei vollständig von der Schraubverbindung aufgebracht. Um die Gummieinlagen über ihre radiale Breite gleichmäßig vorzuspannen, ist eine entsprechend steife Konstruktion von Flanschen und Schraubverbindung erforderlich.

Bei einem aus der gattungsgemäßen DE 24 06 206 C3 bekannten gummigefederten Schienenrad anderer Art sind die ringförmigen Gummieinlagen unter axialer und radialer Vorspannung zwischen einer zylindrischen und einer radialen Stützfläche eines Felgenringes und einer radialen Stützfläche einer Radscheibe einerseits und den im wesentlichen radialen Stützflächen eines mittigen Steges und den unmittelbar benachbart dazu angeordneten im wesentlichen zylindrischen Flanken des Radreifens andererseits gehalten. Dabei liegt der radial geschlitzte Felgenring mit einer konisch ausgebildeten Sitzfläche auf einer entsprechend konisch ausgebildeten Auflagefläche der Radscheibe auf und ist mit ihr über außerhalb der Gummieinlage angeordnete Schraubenbolzen verbunden. Durch die Neigung der konischen Flächen wird ein selbsthemmender Sitz des wegen des radialen Schlitzes im Durchmesser radial spreizbaren Felgenringes auf der Radscheibe erzielt. Durch diesen Sitz werden die Schraubenbolzen von den Rückstellkräften der vorgespannten Gummieinlage entlastet.

Der Erfindung liegt die Aufgabe zugrunde, ein gummigefedertes Schienenfahrzeugrad zu schaffen, das auch bei kleinen Raddurchmessern, wie sie z.B. bei Niederflurwagen vorkommen, eine hohe axiale Steifigkeit und gute radiale Federeigenschaften hat.

Diese Aufgabe wird bei einem gummigefederten Schienenfahrzeugrad der eingangs genannten Art dadurch gelöst, dass der durch Schraubenbolzen gehaltene Flansch mit Passsitz auf der Felge sitzt, wobei der Passsitz als konische Presspassung ausgebildet ist, bei der der Konus des Flansches im spannungsfreien Zustand eine kleinere Konizität als der Konus der Radfelge hat und im aufgepressten Zustand vollflächig am Konus der Radfelge anliegt.

Bei dem erfindungsgemäßen Schienenrad wird durch die Wahl der unterschiedlichen Konizitäten der Konusse des Passsitzes erreicht, dass der aufgepresste Flansch unter Berücksichtigung seiner elastischen Verformung einerseits sicher auf dem Konus der Felge gehalten wird und andererseits die Gummieinlage über ihre gesamte radiale Breite optimal vorgespannt wird. Dem Schraubenbolzen kommt dabei im wesentlichen nur die Funktion zu, den Flansch auf dem Sitz zu halten. Von der Rückstellkraft der Gummieinlage wird er praktisch nicht belastet. Wegen der neuen Festlegung des Flansches auf der Felge steht der gesamte Raum zwischen Steg und Flansche für die Unterbringung der Gummieinlage zur Verfügung. Im Vergleich zu der bekannten Konstruktion mit den die Gummieinlage durchsetzenden Schraubenbolzen wird ein zusätzliches Gummivolumen von bis zu 30% gewonnen. Das wirkt sich positiv auf die Belastbarkeit der Gummieinlage auf Schub aus. Es erlaubt auch vergleichsweise niedrige Bauhöhen.

In diesem Sinne sind nach einer Ausgestaltung der Erfindung die Konizitäten der Konusse des Flansches und der Felge unter Berücksichtigung der Biegeverformung des Flansches infolge der auf ihn einwirkenden Rückstellkraft der vorgespannten Gummieinlage derart gewählt, dass die axiale Haftreibkraft der Presspassung das 0,2 bis 1-fache der Rückstellkraft der vorgespannten Gummieinlage beträgt. Bei dieser Dimensionierung brauchen die Schraubenbolzen also praktisch keine Kraft aufzunehmen.

Optimal ist das Schienenfahrzeugrad nach einer Ausgestaltung der Erfindung dann ausgelegt, wenn die Konizitäten der Konusse des Flansches und der Felge unter Berücksichtigung der Biegeverformung des Flansches infolge der auf ihn einwirkenden Rückstellkraft der vorgespannten Gummieinlage derart gewählt sind, dass die Flächenpressung der Presspassung über deren axialer Breite gleich ist. Konkret heißt das, dass im spannungsfreien Zustand der Durchmesser D₁ des Konus des Flansches gegenüber dem Durchmesser D₂ des Konus der Radfelge jeweils auf der radinneren Seite ein Untermaß von ΔÜ₁ = 0,0005 bis 0,0035 D₁ und auf der radäußeren Seite ein Untermaß von ΔÜ₂ = 0,25 bis 0,75 ΔÜ₁ bei einer axialen Breite des Passsitzes von B = 0,06 bis 0,25 D₁ hat. Der Neigungswinkel des konischen Passsitzes sollte α = 0,3° bis 3,0° betragen.

Es gibt verschiedene Möglichkeiten, den Flansch auszubilden. Vorzugsweise ist der Flansch als flacher Ring ausgebildet, der an einem mit den Schraubenbolzen angeschraubten Ring abgestützt ist. Flansch und Ring können aber auch einstückig ausgebildet sein.

Sofern die beiden Ringe der Gummieinlage exakt senkrecht zur Radachse angeordnet sind, werden sie bei radialer Radlast ausschließlich auf Schub belastet. Vorteilhaft ist es allerdings, wenn sie entgegengesetzt leicht geneigt zueinander angeordnet sind, und zwar derart, dass bei einer radialen Achslast die Gummiringe nicht nur auf Schub, sondern auch auf Druck belastet werden. Ihr Neigungswinkel zur Radachse kann bis zu 75° betragen. Die Neigungswinkel der beiden Ringe können dabei verschieden sein.

In der Praxis haben sich Gummieinlagen bewährt, die eine Shore-Härte von 60 bis 85 haben und im eingebauten Zustand um 5 bis 17% ihrer Dicke komprimiert sind. Vorzugsweise tragen die Gummieinlagen auf ihren Außenseiten anvulkanisierte Ringe.

Sofern die Schienenfahrzeugräder gebremst sind und/oder als Antriebsräder dienen, werden sie nicht nur in axialer und radialer Richtung belastet, sondern auch in Umfangsrichtung. Diese Belastung muss dann auch von der Gummieinlage übernommen werden. Um ein Verschieben der Gummieinlage gegenüber dem Steg und den Flanschen zu vermeiden, kann der Radreifen als Verdrehsicherung gegenüber der Felge Vorsprünge an den Außenseiten der beiden Ringe der Gummieinlage aufweisen, die formschlüssig in Ausnehmungen in den anliegenden Seiten der Flansche und des Steges eingreifen.

Um einerseits dem Steg und der Gummieinlage beim Einfedern genügend Freiraum zu geben und andererseits Spannungskonzentrationen an den Übergängen von der Felge zu den Flanschen zu vermeiden, kann die Felge an ihrer äußeren Peripherie im Bereich der Gummieinlage ein flaches umlaufendes Einfederungsbett für den Steg des Radreifens und die Gummieinlage aufweisen, dessen Randbereiche nach außen einen zunehmend kleineren Krümmungsradius haben.

Im folgenden wird die Erfindung anhand einer einige Ausführungsbeispiele darstellenden Zeichnung näher erläutert. Im einzelnen zeigen:
- Fig. 1: ein Schienenrad für Niederflurfahrzeuge mit konventionellen Radsätzen im radialen Halbschnitt,
- Fig. 2: ein Schienenrad für Niederflurfahrzeuge im Halbschnitt in einer zu Fig. 1 abgewandelten Ausführung,
- Fig. 3: ein Schienenrad im radialen Halbschnitt für Niederflurfahrzeuge mit Losrädern im radialen Halbschnitt,

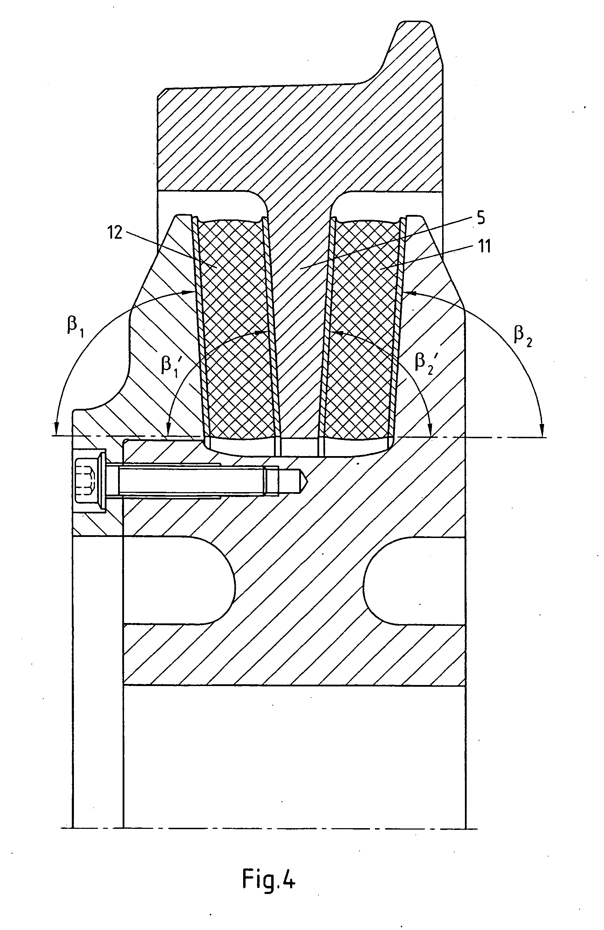

- Fig. 4: ein Schienenrad für Niederflurfahrzeuge in einer zu Fig. 1 abgewandelten Ausführung im radialen Halbschnitt
- Fig. 5: ein Schienenfahrzeugrad in einer zu Fig. 1 abgewandelten Ausführung im radialen Halbschnitt,
- Fig. 6: ein Schienenfahrzeugrad in einer zu Fig. 1 abgewandelten Ausführung im radialen Halbschnitt,
- Fig. 7: eine konische Presspassung der Schienenfahrzeugräder der Figuren 1 bis 6 im Ausschnitt in schematischer Darstellung und
- Fig. 8: eine Felge des Schienenfahrzeugrades der Fig. 3 im radialen Halbschnitt.

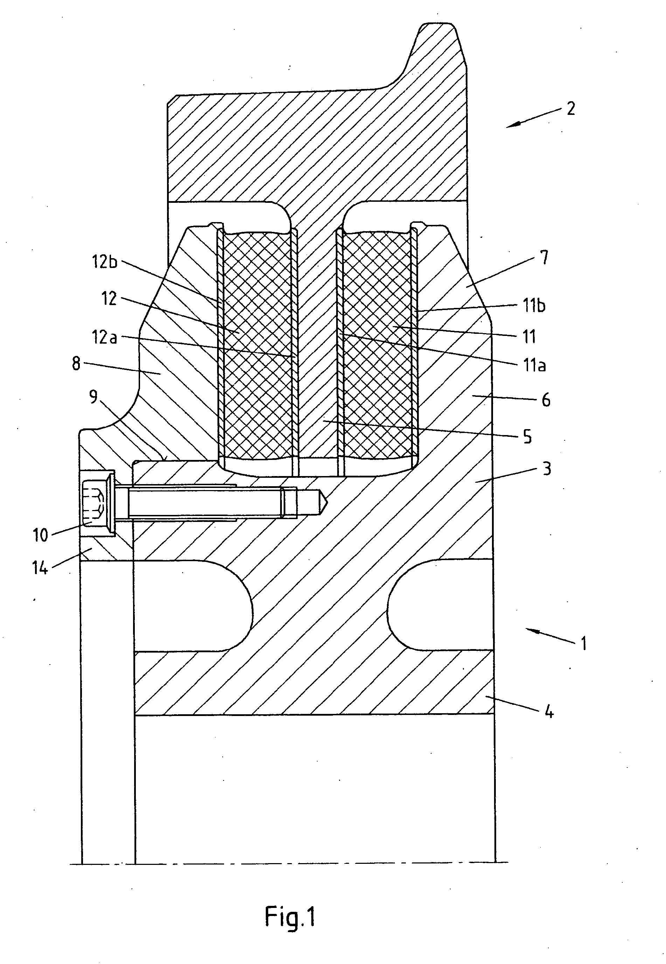

Das in Fig. 1 dargestellte Schienenfahrzeugrad ist für Niederflurfahrzeuge bestimmt. Es weist einen Scheibenradkörper 1 und einen Radreifen 2 auf. Der Scheibenradkörper 1 umfasst eine Radfelge 3 und eine Radnabe 4. Der Radreifen 2 weist einen umlaufenden, innenseitigen mittigen Steg 5 auf. Die Felge 3 weist zwei Flansche 7, 8 auf, von denen der eine Flansch 7 einstückig mit der Felge 3 verbunden ist und der andere Flansch 8 über einen Passsitz 9 auf der Felge 3 sitzt und von Schraubenbolzen 10 zusätzlich gehalten wird. Der Radreifen 2 ist mit der Felge 3 über eine Gummieinlage verbunden, die aus zwei flachen Ringen 11, 12 besteht, an deren Außenseiten Ringe 11a, 11b, 12a, 12b anvulkanisiert sind. Die die Gummieinlage bildenden Ringe 11, 12 haben eine Shore-Härte von 60 bis 85 und stehen unter hoher axialer Vorspannung. Sie sind in ihrer Dicke um 5 bis 17% komprimiert. Aufgrund dieser hohen axialen Vorspannung, die vom Flansch 8 aufgebracht werden muss, ist der Passsitz 9 auf besondere Art und Weise gestaltet.

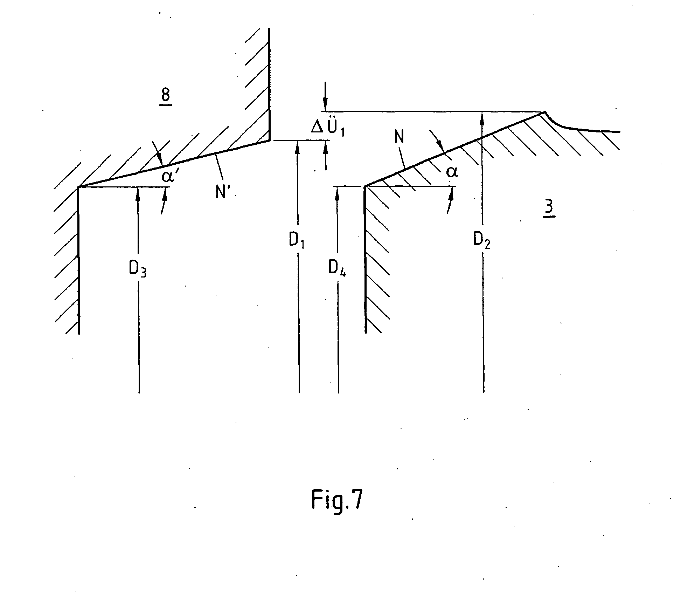

Bei dem Passsitz 9 handelt es sich um eine konische Presspassung. Wie Fig. 7 aus darstellerischen Gründen übertrieben zeigt, ist der Neigungswinkel α des Konus N der Felge 3 größer als der Neigungswinkel α' des Konus N' des Flansches 8. Die Neigungswinkel α, α' liegen zwischen 0,3° und 3°. Im spannungsfreien Zustand hat der Durchmesser D₁ des Konus N' des Flansches 8 gegenüber dem Durchmesser D₂ des Konus N der Radfelge 3 jeweils auf der radinneren Seite ein Übermaß von ΔÜ₁ = 0,0005 bis 0,0035 D₁ , und auf der radäußeren Seite haben die entsprechenden Durchmesser D₃, D₄ ein Übermaß von ΔÜ₂ = 0,25 bis 0,75 ΔÜ₁. Bei diesen Maßverhältnissen der beteiligten Bauteile im Ausgangszustand, d.h. vor der Montage, ergibt sich im montierten Zustand ein fester Sitz der Presspassung bei der gewünschten hohen axialen Vorspannung der Ringe 11, 12 der Gummieinlage. Dabei wird dem Spreizeffekt des Flansches 8 Rechnung getragen, der aufgrund der auf ihn einwirkenden Rückstellkraft der Ringe 11, 12 der vorgespannten Gummieinlage auftritt. Im Ergebnis sorgt dieser Spreizeffekt in Verbindung mit der speziellen konischen Ausgestaltung des Passsitzes 9 dafür, dass die Flächenpressung über die gesamte Breite des Passsitzes 9 gleich ist. Da der Flansch 8 durch diesen Passsitz 9 gehalten ist, sind die Schraubenbolzen 10 entlastet. Im Idealfall kommt ihnen nur Sicherungsfunktionen zu.

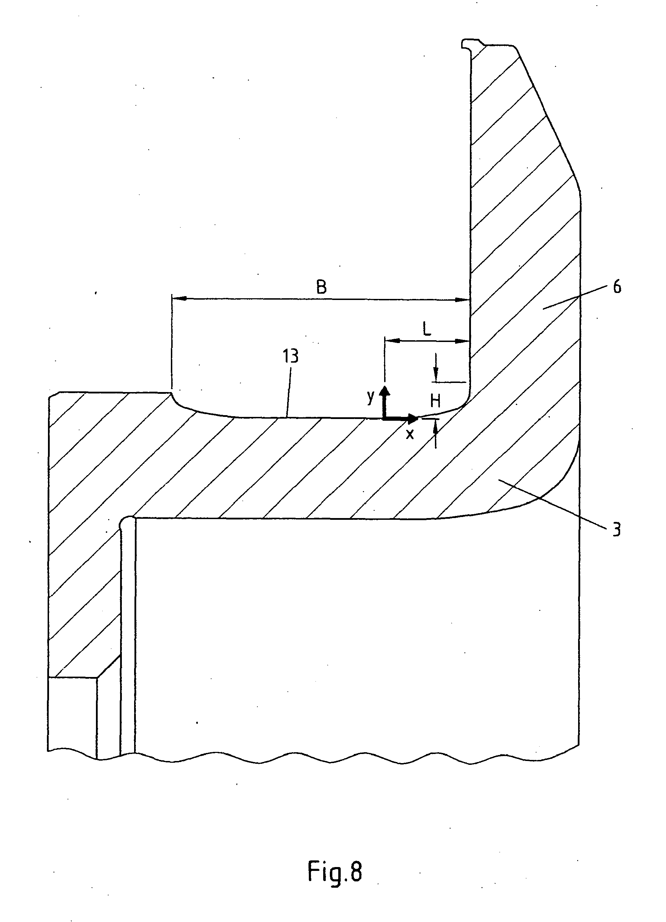

Um einerseits dem Radreifen 2 mit den Ringen 11, 12 der Gummieinlage ausreichend Freiraum zum radialen Einfedern zu geben und andererseits Spannungskonzentrationen im Übergangsbereich von der Felge 3 zum angeformten Flansch 6 zu vermeiden, weist die Felge 3 an ihrer äußeren Peripherie im Bereich der Ringe 11, 12 ein Einfederungsbett 13 für den.Steg 5 des Radreifens 2 und der Ringe 11, 12 auf, dessen Randbereiche nach außen einen zunehmend kleineren Krümmungsradius haben. Unter Verwendung der in Fig. 8 dargestellten Bezeichnungen genügt der Verlauf des Einfederungsbettes 13 folgender Funktion: y = f (x) = 0,07045 - 0,30105x + 0, 18546x² - 0, 03849x³ + 0, 003756x⁴ - 0, 000169x⁵ + 2, 854 . 10⁻⁶ . x⁶, wobei der Ausgangspunkt bei L = 0,3 bis 0,5 B der Breite des Einfederungsbettes ist. Der Krümmungsradius endet bei H = 0,1 bis 0,3 L.

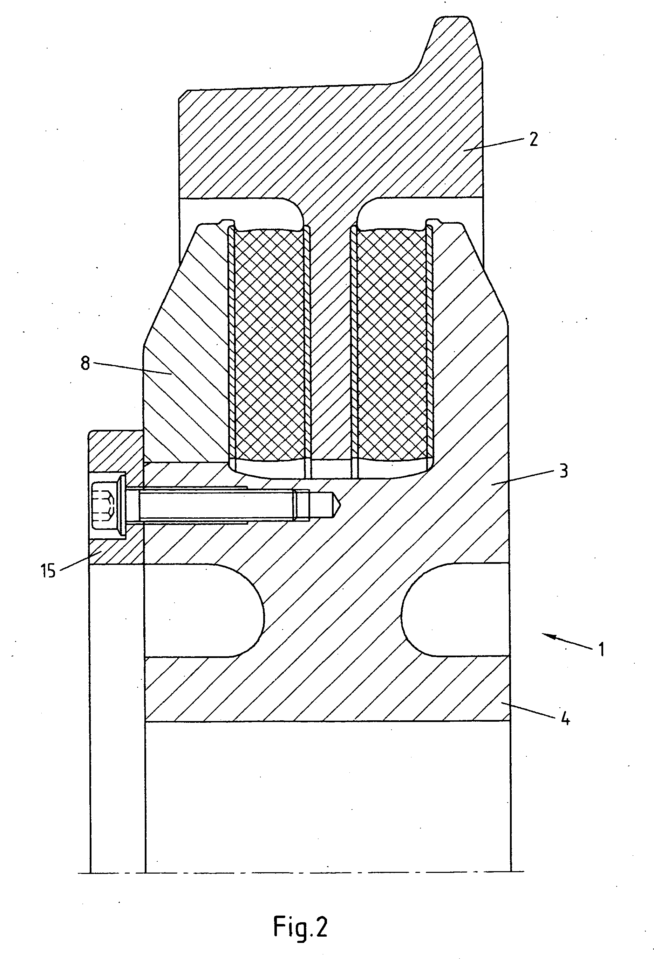

Während beim Ausführungsbeispiel der Fig. 1 der Flansch 8 über einen angeformten Haltering 14 von den Schraubenbolzen 10 gehalten ist, wird er beim Ausführungsbeispiel der Fig. 2 von einem selbständigen Haltering 15 gehalten, der den Flansch 8 nur am inneren Rand geringfügig übergreift.

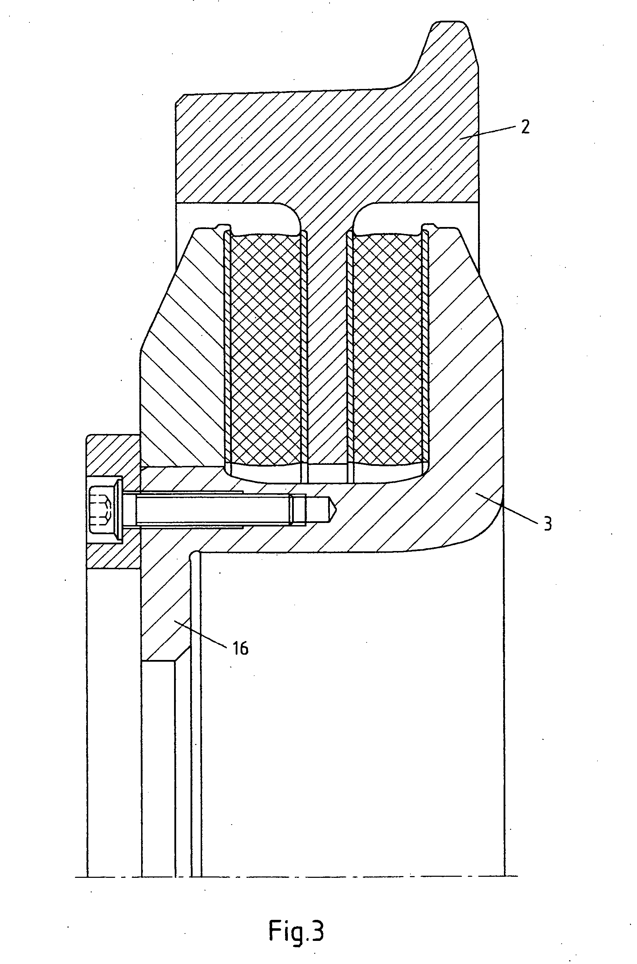

Während beim Ausführungsbeispiel der Fig. 2 die Felge 3 Teil eines Radkörpers 1 ist, ist beim Ausführungsbeispiel der Fig. 3 an der Felge 3 ein Montageflansch 16 angeformt, der an einem entsprechenden Gegenflansch eines Antriebes od.dgl. befestigt werden kann.

Beim Fahrzeugrad gemäß Ausführungsbeispiel 4 sind im Unterschied zu den bisher beschriebenen Ausführungsbeispielen die Ringe 11, 12 der Gummieinlage zur Radachse entgegengesetzt leicht schräggestellt, und zwar derart, dass bei einer radialen Radlast die Gummieinlagen 11, 12 nicht nur auf Schub, sondern auch auf Druck belastet werden. Die Schrägstellung der Ringe 11, 12 der Gummieinlage führt zu einer konischen Ausbildung des Steges 5. Der Neigungswinkel β₁, β₂ der Gummieinlagen liegt zwischen 75° und 90°. Er kann unterschiedlich sein. Auch können die jeweiligen Außenseiten eines Ringes 11, 12 unterschiedlich geneigt sein. So kann die Differenz der Winkel β₁, β₁' bzw. β₂, β₂' im Bereich von 15° liegen. Vorzugsweise sind die Winkel β₁, β₁', β₂, β₂' der Außenseiten eines Ringes 11, 12 derart gewählt, dass die Ringe 11, 12 im radial äußeren Bereich etwas dicker als im radial inneren Bereich ist.

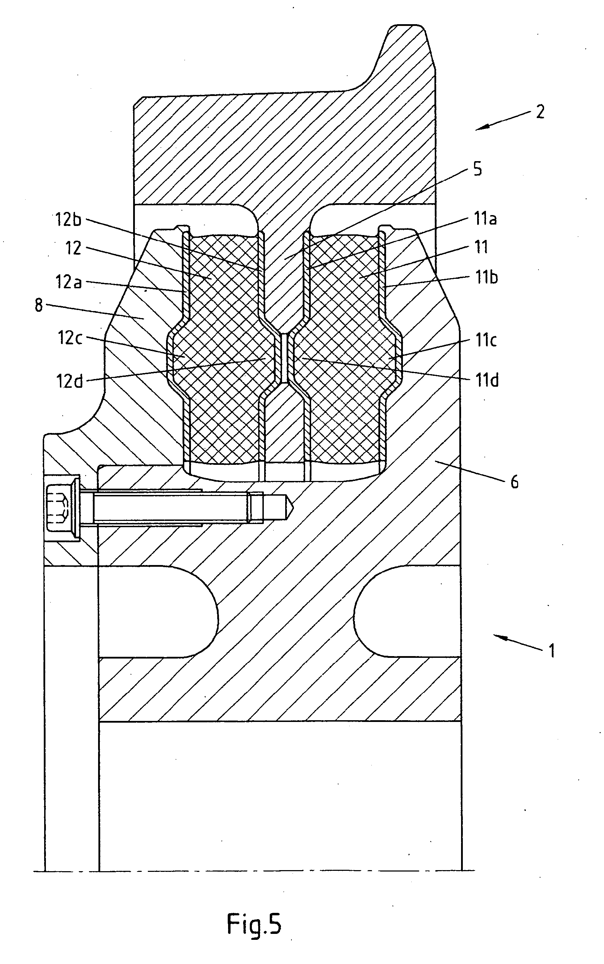

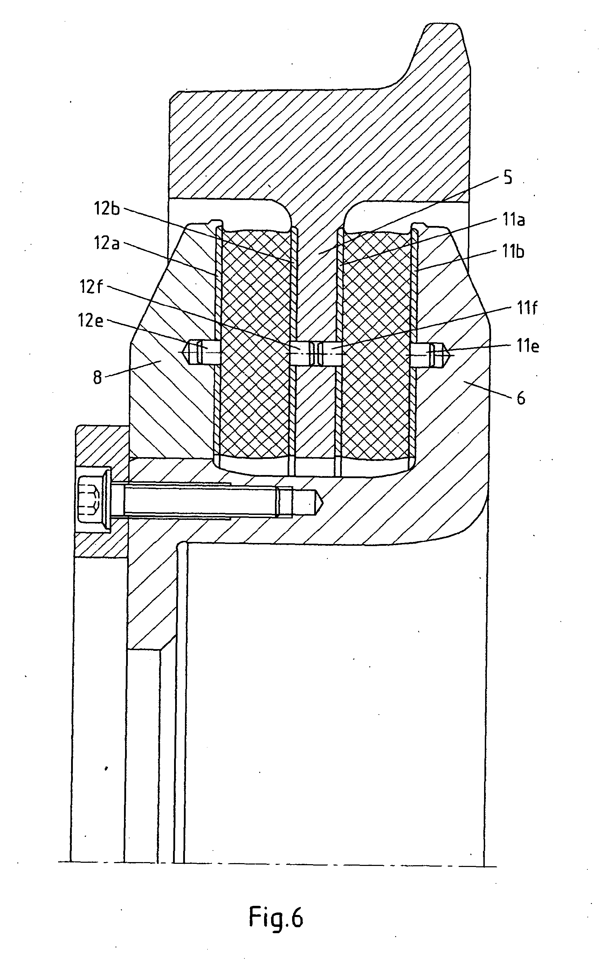

Während beim Ausführungsbeispiel der Fig. 1 die Außenseiten der mit aufvulkanisierten Ringen 11a, 11b, 12a, 12b versehenen Ringe 11, 12 der Gummieinlage glatt sind, haben sie beim Ausführungsbeispiel der Fig. 5 Höcker. Dafür greifen sie mit Vorsprüngen 11c, 11d, 12c, 12d in entsprechende Ausnehmungen in den Flanschen 6, 8 und in dem Steg 5 formschlüssig ein. Auf diese Art und Weise wird eine Verdrehsicherung zwischen Radreifen 2 und Radkörper 1 erreicht. Beim Ausführungsbeispiel der Fig. 6 wird eine solche Verdrehsicherung auf etwas andere Art und Weise erreicht. Bei diesem Ausführungsbeispiel tragen die ringförmigen Bleche stiftförmige Vorsprünge 11e, 11f, 12e, 12f, mit denen sie in entsprechende Ausnehmungen in den Flanschen 6, 8 und in dem Steg 4 eingreifen.

## Patentansprüche

1. Gummigefedertes Schienenrad, bei dem ein Radreifen (2) mit einer Radfelge (3) über eine Gummieinlage verbunden ist, die von zwei flachen, geneigt bis senkrecht zur Radachse angeordneten, perforationsfreien Ringen (11, 12) gebildet ist, wobei die Ringe (11, 12) ausschließlich zwischen geneigt bis senkrecht zur Radachse angeordneten, von einem umlaufenden, innenseitigen, mittigen Steg (5) des Radreifens (2) und zwei äußeren Flanschen (6, 8) der Radfelge (3) gebildeten Stützflächen unter axialer Vorspannung gehalten sind und bei radialer Belastung des Fahrzeugrades überwiegend auf Schub beansprucht werden, und wobei zumindest einer der Flansche (8) von außerhalb der Ringe (11, 12) der Gummieinlage angeordneten Schraubenbolzen (10) unmittelbar an der Felge (3) gehalten ist,
**dadurch gekennzeichnet, dass** der durch Schraubenbolzen gehaltene Flansch (8) mit Passsitz (9) auf der Felge (3) sitzt, wobei der Passsitz (9) als konische Presspassung ausgebildet ist, bei der der Konus (N') des Flansches (8) im spannungsfreien Zustand eine kleinere Konizität (α') als der Konus (N) der Radfelge (3) hat und im aufgepressten Zustand vollflächig am Konus (N) der Radfelge (3) anliegt.

2. Schienenfahrzeugrad nach Anspruch 1, **dadurch gekennzeichnet, dass** die Konizitäten (α, α') der Konusse (N, N') der Felge (3) und des Flansches (8) unter Berücksichtigung der Biegeverformung des Flansches (8) infolge der auf ihn einwirkenden Rückstellkraft der Ringe (11, 12) der vorgespannten Gummieinlage derart gewählt sind, dass die axiale Haftreibkraft der Presspassung das 0,2- bis 1-fache der Rückstellkraft der vorgespannten Gummieinlage beträgt.

3. Schienenfahrzeugrad nach Anspruch 1 oder 2, **dadurch gekennzeichnet, dass** die Konizitäten (α, α') der Konusse (N, N') der Felge (3) und des Flansches (8) unter Berücksichtigung der Biegeverformung des Flansches (8) infolge der auf ihn einwirkenden Rückstellkraft der Ringe (11, 12) der vorgespannten Gummieinlage derart gewählt sind, dass die Flächenpressung der Presspassung über deren axialer Breite gleich ist.

4. Schienenfahrzeugrad nach einem der Ansprüche 1 bis 3, **dadurch gekennzeichnet, dass** im spannungsfreien Zustand der Durchmesser (D₁) des Konus (N') des Flansches (8) gegenüber dem Durchmesser (D₂) des Konus (N) der Radfelge (3) jeweils auf der radinneren Seite ein Übermaß von ΔÜ₁ = 0,0005 bis 0,0035 D₁ und auf der radäußeren Seite ein Übermaß von ΔÜ₂ = 0,25 bis 0,75 ΔÜ₁ bei einer axialen Breite des Passsitzes (9) von B= 0,006 bis 0,25 D₁ hat.

5. Schienenfahrzeugrad nach einem der Ansprüche 1 bis 4, **dadurch gekennzeichnet, dass** der Neigungswinkel der konischen Presspassung α, α' = 0,3° bis 3,0° beträgt.

6. Schienenfahrzeugrad nach einem der Ansprüche 1 bis 5, **dadurch gekennzeichnet, dass** der Flansch (8) des Passsitzes (9) als flacher Ring ausgebildet ist, der an einem mit den Schraubenbolzen (10) angeschraubten Ring (14) abgestützt ist.

7. Schienenfahrzeugrad nach einem der Ansprüche 1 bis 6, **dadurch gekennzeichnet, dass** die beiden Ringe (11, 12) der Gummieinlage entgegengesetzt geneigt sind.

8. Schienenfahrzeugrad nach Anspruch 7, **dadurch gekennzeichnet, dass** die Neigungswinkel (β₁, β₂, β₁, β₂) der Ringe (11, 12) zur Radachse zwischen 75° und 90° betragen.

9. Schienenfahrzeugrad nach Anspruch 8, **dadurch gekennzeichnet, dass** die Neigungswinkel (β₁, β₂, β₁, β₂) der beiden Ringe (11, 12) verschieden sind.

10. Schienenfahrzeugrad nach einem der Ansprüche 1 bis 9, **dadurch gekennzeichnet, dass** die beiden Ringe (11, 12) der Gummieinlage eine Shore-Härte von 60 bis 85 haben und im eingebauten Zustand um 5% bis 17% ihrer Dicke komprimiert sind.

11. Schienenfahrzeugrad nach einem der Ansprüche 1 bis 10, **dadurch gekennzeichnet, dass** der Radreifen (2) als Verdrehsicherung gegenüber der Felge (3) Vorsprünge (11c, 11d, 12c, 12d, 11e, 11f, 12e, 12f) an den Außenseiten der beiden Ringe (11, 12) der Gummieinlage aufweist, die formschlüssig in Ausnehmungen in den anliegenden Seiten der Flansche (6, 8) und des Steges (5) eingreifen.

12. Schienenfahrzeugrad nach einem der Ansprüche 1 bis 11, **dadurch gekennzeichnet, dass** die Felge (3) an ihrer äußeren Peripherie im Bereich der Gummieinlage ein flaches, umlaufendes Einfederungsbett (13) für den Steg (5) des Radreifens (2) und die Ringe der Gummieinlage (11, 12) aufweist, dessen Randbereiche nach außen einen zunehmend kleineren Krümmungsradius haben.

## Claims

1. A rubber-sprung rail wheel in which a wheel tyre (2) is connected to a wheel rim (3) by way of a rubber insert formed by two flat perforation-free rings (11, 12) which are arranged so as to be inclined to the vertical in relation to the wheel axle, wherein the rings (11, 12) are exclusively held, under axial pre-stress, between supporting surfaces which are arranged so as to be inclined to the vertical in relation to the wheel axle and which are formed by a circumferential inner middle web (5) of the wheel tyre (2) and two outer flanges (6, 8) of the wheel rim (3), and when the vehicle wheel is under a radial load, said rings are predominantly subjected to shear stress, and wherein at least one of the flanges (8) is held directly to the wheel rim (3) by screw bolts (10) arranged outside the rings (11, 12) of the rubber insert, **characterised in that** the flange (8) which is held by screw bolts is seated in an interference fit (9) on the wheel rim (3), wherein the interference fit (9) is configured as a conical press fit in which the cone (N') of the flange (8) in the stress-free state has a lesser conicity (α') than the cone (N) of the wheel rim (3) and in the pressed-on state, rests with the entire surface against the cone (N) of the wheel rim (3).

2. The rail vehicle wheel according to claim 1, **characterised in that** the conicities (α, α') of the cones (N, N') of the wheel rim (3) and the flange (8), taking into account the bending strain of the flange (8) due to the restoring force of the rings (11, 12) of the pre-stressed rubber insert, acting on said flange, are selected in such a manner that the axial static friction of the press fit amounts to 0.2 times to 1 times the of restoring force of the pre-stressed rubber insert.

3. The rail vehicle wheel according to claim 1 or 2, **characterised in that** the conicities (α, α') of the cones (N, N') of the wheel rim (3) and the flange (8), taking into account the bending strain of the flange (8) due to the restoring force of the rings (11, 12) of the pre-stressed rubber insert, acting on said flange, are selected in such a manner that the surface pressure of the press fit is the same across its axial width.

4. The rail vehicle wheel according to any one of claims 1 to 3, **characterised in that** in the stress-free state the diameter (D₁) of the cone (N') of the flange (8), when compared to the diameter (D₂) of the cone (N) of the wheel rim (3), in each case on the inside of the wheel, has an excess dimension ΔÜ₁ = 0.0005 to 0.0035 D1, and on the outside of the wheel has an excess dimension ΔÜ₂ = 0.25 to 0.75 ΔÜ₁ when the axial width of the interference fit (9) is B = 0.006 to 0.25 D₁.

5. The rail vehicle wheel according to any one of claims 1 to 4, **characterised in that** the angle of inclination of the conical press fit is α, α' = 0.3° to 3.0°.

6. The rail vehicle wheel of according to any one of claims 1 to 5, **characterised in that** the flange (8) of the interference fit (9) is designed as a flat ring which is supported by a ring (14) screwed on with the screw bolts (10).

7. The rail vehicle wheel according to any one of claims 1 to 6, **characterised in that** the two rings (11, 12) of the rubber insert are oppositely inclined.

8. The rail vehicle wheel according to claim 7, **characterised in that** the angles of inclination (β₁, β₂, β₁', β₂') of the rings (11, 12) in relation to the wheel axle are between 75° and 90°.

9. The rail vehicle wheel according to claim 8, **characterised in that** the angles of inclination (β₁, β₂, β₁', β₂') of the two rings (11, 12) differ.

10. The rail vehicle wheel according to any one of claims 1 to 9, **characterised in that** the two rings (11, 12) of the rubber insert have a Shore hardness of 60 to 85 and in the installed state are compressed by 5% to 17% of their thickness.

11. The rail vehicle wheel according to any one of claims 1 to 10, **characterised in that** the wheel tyre (2) comprises projections (11c, 11d, 12c, 12d, 11e, 11f, 12e, 12f) on the outsides of the two rings (11, 12) of the rubber insert as an anti-rotational device relative to the wheel rim (3), the projections engaging positively in recesses in the adjacent sides of the flanges (6. 8) and of the web (5).

12. The rail vehicle wheel according to any one of claims 1 to 11, **characterised in that** on its outer periphery in the region of the rubber insert, the wheel rim (3) comprises a flat circumferential spring deflection bed (13) for the web (5) of the wheel tyre (2) and the rings of the rubber insert (11, 12), the rim areas thereof having an increasingly smaller radius of curvature towards the outside.

## Revendications

1. Roue de chemins de fer à suspension de caoutchouc, dans laquelle un bandage de roue (2) est raccordé à une jante de roue (3) via une couche intermédiaire de caoutchouc, qui est formée de deux anneaux plats sans perforation (11, 12), agencés inclinés jusqu'à perpendiculaires à l'axe de la roue, dans laquelle les anneaux (11, 12) sont maintenus sous précontrainte axiale exclusivement entre des surfaces d'appui agencées inclinées jusqu'à perpendiculaires à l'axe de la roue et formées d'une nervure périphérique interne centrale (5) du bandage de roue (2) et de deux flasques extérieurs (6, 8) de la jante de roue (3) et sont sollicités en cas de charge radiale de la roue du véhicule principalement au cisaillement, et dans laquelle au moins l'un des flasques (8) est maintenu directement sur la jante (3) par des boulons filetés (10) agencés à l'extérieur des anneaux (11, 12) de la couche intermédiaire de caoutchouc, **caractérisée en ce que** le flasque (8) maintenu par les boulons filetés s'appuie par ajustement fin (9) sur la jante (3), l'ajustement fin (9) se présentant sous la forme d'un ajustement conique serré, dans lequel le cône (N') du flasque (8) présente, à l'état non contraint, une conicité (α') inférieure à celle du cône (N) de la jante de roue (3) et s'appuie, à l'état engagé par pression, sur toute sa surface, sur le cône (N) de la jante de roue (3).

2. Roue de véhicule de chemins de fer selon la revendication 1, **caractérisée en ce que** les conicités (α, α') des cônes (N, N') de la jante (3) et du flasque (8) sont choisies en tenant compte de la déformation à la flexion du flasque (8) en raison de la force de rappel des anneaux (11, 12) de la couche intermédiaire de caoutchouc précontrainte agissant sur lui de sorte que la force axiale d'adhérence de l'ajustement serré représente 0,2 à 1 fois la force de rappel de la couche intermédiaire de caoutchouc précontrainte.

3. Roue de véhicule de chemins de fer selon la revendication 1 ou 2, **caractérisée en ce que** les conicités (α, α') des cônes (N, N') de la jante (3) et du flasque (8) sont choisies en tenant compte de la déformation à la flexion du flasque (8) en raison de la force de rappel des anneaux (11, 12) de la couche intermédiaire de caoutchouc précontrainte agissant sur lui de sorte que le serrage des surfaces de l'ajustement serré soit identique sur leur largeur axiale.

4. Roue de véhicule de chemins de fer selon l'une quelconque des revendications 1 à 3, **caractérisée en ce qu'**à l'état non contraint, le diamètre (D₁) du cône (N') du flasque (8) présente par rapport au diamètre (D₂) du cône (N) de la jante de roue (3), respectivement, sur le côté interne de la roue, une surmesure de ΔÜi = 0,0005 à 0,0035 D₁ et, sur le côté extérieur de la roue, une surmesure de ΔÜ₂= 0,25 à 0,75 ΔÜi sur une largeur axiale de l'ajustement fin (9) de B= 0,006 à 0,25 D₁.

5. Roue de véhicule de chemins de fer selon l'une quelconque des revendications 1 à 4, **caractérisée en ce que** l'angle d'inclinaison de l'ajustement conique serré atteint α, α' = 0,3 ° à 3,0°.

6. Roue de véhicule de chemins de fer selon l'une quelconque des revendications 1 à 5, **caractérisée en ce que** le flasque (8) de l'ajustement fin (9) se présente sous la forme d'un anneau plat qui est soutenu sur un anneau (14) vissé avec les boulons filetés (10).

7. Roue de véhicule de chemins de fer selon l'une quelconque des revendications 1 à 6, **caractérisée en ce que** les deux anneaux (11, 12) de la couche intermédiaire de caoutchouc sont inclinés de manière opposée.

8. Roue de véhicule de chemins de fer selon la revendication 7, **caractérisée en ce que** les angles d'inclinaison (β₁, β₂, β₁', β₂') des anneaux (11, 12) par rapport à l'axe de la roue sont compris entre 75 ° et 90 °.

9. Roue de véhicule de chemins de fer selon la revendication 8, **caractérisée en ce que** les angles d'inclinaison (β₁, β₂, β₁', β₂') des deux anneaux (11, 12) sont différents.

10. Roue de véhicule de chemins de fer selon l'une quelconque des revendications 1 à 9, **caractérisée en ce que** les deux anneaux (11, 12) de la couche intermédiaire de caoutchouc possèdent une dureté Shore de 60 à 85 et sont comprimés, à l'état monté, de 5 % à 17 % par rapport à leur épaisseur.

11. Roue de véhicule de chemins de fer selon l'une quelconque des revendications 1 à 10, **caractérisée en ce que** le bandage de roue (2) présente, comme sécurité anti-giratoire par rapport à la jante (3), des saillies (11c, 11 d, 12c, 12d, 11e, 11f, 12e, 12f) sur les côtés externes des deux anneaux (11, 12) de la couche intermédiaire de caoutchouc, qui s'engagent par complémentarité de formes dans des évidements sur les côtés adjacents des flasques (6, 8) et de la nervure (5).

12. Roue de véhicule de chemins de fer selon l'une quelconque des revendications 1 à 11, **caractérisée en ce que** la jante (3) présente sur sa périphérie externe, dans la zone de la couche intermédiaire de caoutchouc, un banc de compression élastique plat périphérique (13) pour la nervure (5) du bandage de roue (2) et les anneaux de la couche intermédiaire de caoutchouc (11, 12) dont les zones de bord ont un rayon de courbure décroissant vers l'extérieur.
